# EUROPÄISCHE PATENTSCHRIFT

(11) **EP 3 476 027 B1**
(45) Veröffentlichungstag und Bekanntmachung des Hinweises auf die Patenterteilung: **23.09.2020**
(21) Anmeldenummer: 17754091.1
(22) Anmeldetag: 27.07.2017
(51) Int. Cl.: H02K 15/06

(54) **VERFAHREN UND VORRICHTUNG ZUM EINBRINGEN VON DRÄHTEN**
METHOD AND DEVICE FOR INSERTING WIRES
PROCÉDÉ ET DISPOSITIF D'INSERTION DE FILS MÉTALLIQUES

(30) Priorität: 27.07.2016 DE 102016113894
(43) Veröffentlichungstag der Anmeldung: 01.05.2019
(73) Patentinhaber: Grob-Werke GmbH & Co. KG, 87719 Mindelheim (DE)
(72) Erfinder: RAUSCHER, Ralf, 87748 Fellheim (DE); HAGGENMUELLER, Tobias, 87647 Unterthingau (DE)
(74) Vertreter: Kastel, Stefan
(86) Internationale Anmeldenummer: PCT/EP2017/069097
(87) Internationale Veröffentlichungsnummer: WO 2018/019970

(56) Entgegenhaltungen:
- JP-A- S5 619 363
- JP-A- 2009 005 434
- US-A1- 2009 260 218
- US-B1- 6 229 241

## Beschreibung

Die Erfindung betrifft ein Verfahren und eine Vorrichtung zum Einbringen einer Mehrzahl von Drähten in eine Mehrzahl von Nuten eines Bauteils. Bei dem Bauteil handelt es sich um einen Stator oder um einen Rotor eines Elektromotors.

Aus der US 2009/0260218 A1 ist ein Verfahren und eine Vorrichtung zum Einbringen von Drähten in einen Stator bekannt. Hierzu wird eine konische Spule mit einem oberen Spulenende kleinen Durchmessers und einem unteren Spulenende größeren Durchmessers bereitgestellt und axial in den Stator eingeführt. Dann wird die konische Spule anschließend radial expandiert, um Spulenbereiche in Schlitze des Stators zu drücken. Hierdurch soll die Notwendigkeit einer Verformung des Basisendes der Spule vermieden und damit der Herstellprozess vereinfacht werden.

Um ein Verfahren zum Einbringen einer dreiphasigen Spule in einen Stator zu schaffen, bei dem eine Dreiphasenspulengruppe durch einen einzelnen Drückvorgang in jeden Schlitz des Stators eingebracht werden kann, ist aus der JP 2009 005434 A ein Verfahren und eine Vorrichtung zum Einbringen von Drähten in einen Stator bekannt, bei der die Gruppe auf mehreren Klingen aufgebracht wird, wobei die drei unterschiedlichen Spulen der drei Phasen durch unterschiedliche Abstreifer nacheinander in die jeweiligen Schlitze eingebracht werden.

Bei dem Verfahren nach der US 6 229 241 B1 werden Drähte zweier unterschiedlicher Spulen nebeneinander jeweiligen Schlitzen eines Stators aufgenommen. Alle Spulen werden aufeinanderfolgend in Schlitze eingebracht. Aus der JP S56 19363 A sind ein Verfahren und eine Vorrichtung zum Einbringen von Drähten in einen Stator bekannt. Dabei werden Spulen auf einem Träger gewickelt, der Träger wird axial in den Stator geschoben und dann werden Drähte der Spulen mit radial beweglichen Greiferelementen radial in Schlitze des Stators geschoben.

Bauteile in Form von Statoren und Rotoren eines Elektromotors werden in naher Zukunft in wesentlich höherer Stückzahl hergestellt werden als bislang, insbesondere in der Leistungsklasse, welche zum Antrieb von Elektrofahrzeugen erforderlich ist. Grund hierfür ist insbesondere die zunehmende Verbreitung von Elektromobilität.

Dementsprechend ist es wünschenswert, neuartige, beispielsweise effiziente Herstellungsverfahren und zugehörige Vorrichtungen zu entwickeln, mit welchen sich derartige Bauteile von Elektromotoren herstellen lassen.

Dies wird erfindungsgemäß durch ein Verfahren und eine Vorrichtung nach den entsprechenden Hauptansprüchen dieser Anmeldung erreicht. Vorteilhafte Ausgestaltungen können beispielsweise den jeweiligen Unteransprüchen entnommen werden.

Die Erfindung betrifft ein Verfahren zum Einbringen einer Mehrzahl von Drähten in eine Mehrzahl von Nuten eines Bauteils in Form eines Stators oder eines Rotors eines Elektromotors, wobei das Bauteil eine Längsachse aufweist, wobei das Verfahren folgende Schritte aufweist:
- Bereitstellen der Drähte radial versetzt zum Bauteil, so dass sich die Drähte zumindest teilweise entlang der Längsachse erstrecken,
- Greifen der Drähte an ihrem jeweiligen ersten axialen Ende mittels einer Anzahl von ersten Greifelementen und an ihrem jeweiligen zweiten, dem ersten gegenüberliegenden axialen Ende mittels einer Anzahl von zweiten Greifelementen, und
- radiales Bewegen der Greifelemente, dabei Drücken der Drähte in die Nuten.

Mittels des erfindungsgemäßen Verfahrens ist ein schnelles und effizientes Einbringen der Drähte in das Bauteil möglich.

Bei dem Bauteil handelt es sich um einen Stator oder einen Rotor. Derartige Bauteile werden in Elektromotoren verwendet.

Typischerweise ist das Bauteil zumindest überwiegend rotationssymmetrisch um die Längsachse. Die Nuten können insbesondere entlang eines Umfangs verteilt sein. Sie können sich insbesondere in Längsrichtung erstrecken und sie können an ihren Längsenden offen sein. Damit sind die Nuten auch seitlich zugänglich.

Bei den Drähten kann es sich insbesondere um Drähte einer Wicklung eines Elektromotors handeln. Eine solche Wicklung kann beispielsweise als Wellenwicklung oder Schleifenwicklung ausgeführt sein. Es können insbesondere mehrere Drähte verwendet werden, welche unterschiedlichen Phasen des Elektromotors zugeordnet sind.

Die Greifelemente können insbesondere in Form von Stäben oder anderen Elementen ausgeführt sein, welche sich insbesondere zumindest teilweise, vorzugsweise mit einem an den Drähten angreifenden Abschnitt, in Richtung der Längsachse erstrecken können.

Insbesondere können jeweils ein erstes Greifelement und ein zweites Greifelement pro Nut vorgesehen sein.

Es kann insbesondere vorgesehen sein, dass sich die ersten Greifelemente von einer bestimmten, quer zur Längsrichtung weisenden Blickrichtung betrachtet links von den Drähten und/oder dem Bauteil befinden, und dass sich die zweiten Greifelemente entsprechend rechts von den Drähten und/oder dem Bauteil befinden. Dies ist auch umgekehrt möglich.

Gemäß einer Ausführung ist vorgesehen, dass
- die Drähte vor dem Bereitstellen axial versetzt zum Bauteil angeordnet sind, und
- zum Bereitstellen Bauteil und Drähte relativ zueinander axial verschoben werden, so dass Bauteil und Drähte axial zueinander ausgerichtet sind.

Dabei kann beispielsweise das Bauteil verschoben werden, es können die Drähte verschoben werden, oder es können sowohl das Bauteil wie auch die Drähte verschoben werden.

Gemäß der Erfindung ist vorgesehen, dass die Drähte vor dem Bereitstellen komprimiert werden.

Damit können die Drähte soweit verdichtet werden, dass sie in die Nuten passen oder dass mehr Drähte in eine jeweilige Nut passen.

Gemäß einer Ausführung ist vorgesehen, dass die Drähte mittels eines Sternmotors komprimiert werden. Dabei handelt es sich insbesondere um ein radial von außen wirkendes und/oder die Drähte radial außen umgebendes Werkzeug, welches die Drähte insbesondere radial einwärts komprimieren kann. Auch die umgekehrte radiale Richtung ist jedoch möglich.

Gemäß einer Ausführung ist vorgesehen, dass die Drähte mittels der ersten Greifelemente und der zweiten Greifelemente komprimiert werden. Damit können die ohnehin vorhanden Greifelemente auch zum Komprimieren verwendet werden. Dies kann zusätzlich zum Komprimieren mittels eines Sternmotors oder auch alternativ dazu erfolgen.

Gemäß einer Ausführung ist vorgesehen, dass die Drähte mittels eines Sternmotors, der ersten Greifelemente und der zweiten Greifelemente komprimiert werden. Dies entspricht einer hybriden Lösung der beiden eben beschriebenen Vorgehensweisen.

Gemäß einer Ausführung ist vorgesehen, dass die Greifelemente zum Komprimieren die Drähte auf einer radialen Seite der Drähte greifen, welche gegenüberliegend ist zur Seite, an welcher die Greifelemente die Drähte zum Drücken in die Nuten greifen. Damit kann ein optimales Greifen erreicht werden. Gemäß einer Ausführung ist vorgesehen, dass die Greifelemente zwischen dem Komprimieren und dem Drücken der Drähte in die Nuten axial von den Drähten weg bewegt werden, um die jeweilige radiale Seite zu wechseln. Damit kann eine Beschädigung der Drähte vermieden werden.

Gemäß einer Ausführung ist vorgesehen, dass die Drähte radial einwärts komprimiert werden. Gemäß einer Ausführung ist vorgesehen, dass die Drähte radial auswärts komprimiert werden. Das Komprimieren erfolgt dabei bevorzugt entgegengesetzt zum Einbringen. Insbesondere kann das Komprimieren in einer Richtung von den Nuten weg erfolgen.

Gemäß der Erfindung ist weiter vorgesehen, dass die Drähte beim Komprimieren auf oder zwischen eine Anzahl von Leitblechen gedrückt werden. Die Leitbleche können dabei insbesondere für einen Halt bzw. eine Stabilisierung der Drähte in Umfangsrichtung sorgen.

Erfindungsgemäß sind die Leitbleche radial beweglich.

Bevorzugt werden die Leitbleche beim Drücken der Drähte in die Nuten von den Nuten weg bewegt. Die Leitbleche werden in diesem Fall also insbesondere entgegengesetzt zu den Drähten bewegt.

Das Bauteil wird bevorzugt zumindest anfänglich von den ersten Greifelementen gehalten. Die ersten Greifelemente können zum Halten des Bauteils insbesondere radial in die Nuten eingreifen. Vorzugsweise ist das Bauteil mittels der ersten Greifelemente relativ zu den Drähten axial beweglich. Damit können die ersten Greifelemente eine weitere Aufgabe, nämlich das Halten des Bauteils, erfüllen.

Gemäß einer Weiterbildung werden die Drähte schief zur Achse in die Nuten eingebracht. Dadurch kann ein Verkanten vermieden werden.

Gemäß einer Ausführung ist vorgesehen, dass die Drähte dadurch schief zur Achse in die Nuten eingebracht werden, dass
- die ersten Greifelemente früher und/oder schneller radial bewegt werden als die zweiten Greifelemente, oder
- die zweiten Greifelemente früher und/oder schneller radial bewegt werden als die ersten Greifelemente.

Gemäß einer Ausführung werden die Greifelemente zum Drücken der Drähte in die Nuten radial einwärts bewegt. Dies kann insbesondere angewendet werden, wenn die Nuten nach außen weisen, beispielsweise bei einem Rotor.

Gemäß einer Ausführung werden die Greifelemente zum Drücken der Drähte in die Nuten radial auswärts bewegt. Dies kann insbesondere angewendet werden, wenn die Nuten nach innen weisen, beispielsweise bei einem Stator.

Insbesondere können die Drähte beim Einbringen auf die Nuten zu bewegt werden.

Gemäß einer Weiterbildung werden die Nuten abschließend mit jeweils zumindest einem Deckschieber verschlossen. Damit können die Drähte vorteilhaft geschützt werden.

Es kann auch vorgesehen sein, dass vor dem Einbringen von Drähten eine Isolationsfolie in die jeweilige Nut und/oder in alle Nuten eingebracht wird.

Die Erfindung betrifft des Weiteren eine Vorrichtung zum Einbringen einer Mehrzahl von Drähten in eine Mehrzahl von Nuten eines Bauteils in Form eines Stators oder eines Rotors eines Elektromotors, wobei das Bauteil eine Längsachse aufweist, wobei die Vorrichtung folgendes aufweist:
- eine Anzahl von ersten Greifelementen zum Greifen der Drähte an ihrem jeweiligen ersten axialen Ende und eine Anzahl von zweiten Greifelementen zum Greifen der Drähte an ihrem jeweiligen zweiten, dem ersten gegenüberliegenden axialen Ende, wenn die Drähte radial versetzt zum Bauteil bereitgestellt sind, und
- wobei die Greifelemente dazu ausgebildet sind, sich radial zu Bewegen und dabei die Drähte in die Nuten zu drücken.

Die Vorrichtung ist insbesondere geeignet bzw. ausgebildet zum Ausführen eines erfindungsgemäßen Verfahrens. Hinsichtlich des Verfahrens kann auf alle beschriebenen Ausführungen und Varianten zurückgegriffen werden.

Die nachfolgenden Vorrichtungsmerkmale sind ähnlich zu den bereits erwähnten Verfahrensmerkmalen. Soweit dies nicht als erforderlich angesehen wurde, wird auf Wiederholungen von Beschreibungen oder Vorteilen verzichtet. Es sei auf die obige Beschreibung der Verfahrensmerkmale verwiesen, welche bei den Vorrichtungsmerkmalen entsprechend anwendbar ist.

Gemäß einer Ausführung ist vorgesehen, dass die Drähte vor dem Bereitstellen axial versetzt zum Bauteil anordenbar sind, und zum Bereitstellen Bauteil und Drähte relativ zueinander axial verschiebbar sind, so dass Bauteil und Drähte axial zueinander ausgerichtet sind.

Gemäß der Erfindung ist vorgesehen, dass die Vorrichtung dazu ausgebildet ist, die Drähte vor dem Bereitstellen zu komprimieren.

Gemäß einer Ausführung ist vorgesehen, dass die Vorrichtung einen Sternmotor zum Komprimieren der Drähte aufweist.

Gemäß einer Ausführung ist vorgesehen, dass die ersten Greifelemente und die zweiten Greifelemente zum Komprimieren der Drähte ausgebildet sind.

Gemäß einer Ausführung ist vorgesehen, dass die Vorrichtung einen Sternmotor zum Komprimieren der Drähte aufweist und die ersten Greifelemente und die zweiten Greifelemente zum Komprimieren der Drähte ausgebildet sind.

Gemäß einer Ausführung ist vorgesehen, dass die Greifelemente dazu ausgebildet sind, zum Komprimieren die Drähte auf einer radialen Seite der Drähte zu greifen, welche gegenüberliegend ist zur Seite, an welcher die Greifelemente die Drähte zum Drücken in die Nuten greifen.

Gemäß einer Ausführung ist vorgesehen, dass die Greifelemente dazu ausgebildet sind, zwischen dem Komprimieren und dem Drücken der Drähte in die Nuten axial von den Drähten weg bewegt zu werden, um die jeweilige radiale Seite zu wechseln.

Gemäß einer Ausführung ist vorgesehen, dass die Vorrichtung dazu ausgebildet ist, die Drähte radial einwärts zu komprimieren.

Gemäß einer Ausführung ist vorgesehen, dass die Vorrichtung dazu ausgebildet ist, die Drähte radial auswärts zu komprimieren.

Gemäß der Erfindung ist vorgesehen, dass die Vorrichtung eine Anzahl von Leitblechen aufweist, wobei die Drähte beim Komprimieren auf oder zwischen die Leitbleche gedrückt werden.

Gemäß der Erfindung ist vorgesehen, dass die Leitbleche radial beweglich sind.

Gemäß einer Ausführung ist vorgesehen, dass die Vorrichtung dazu ausgebildet ist, die Leitbleche beim Drücken der Drähte in die Nuten von den Nuten weg zu bewegen.

Gemäß einer Ausführung ist vorgesehen, dass die ersten Greifelemente dazu ausgebildet sind, das Bauteil zumindest anfänglich zu halten.

Gemäß einer Ausführung ist vorgesehen, dass die ersten Greifelemente dazu ausgebildet sind, zum Halten des Bauteils radial in die Nuten einzugreifen.

Gemäß einer Ausführung ist vorgesehen, dass das Bauteil mittels der ersten Greifelemente relativ zu den Drähten axial beweglich ist.

Gemäß einer Ausführung ist vorgesehen, dass die Drähte schief zur Achse in die Nuten eingebracht werden.

Gemäß einer Ausführung ist vorgesehen, dass die Drähte dadurch schief zur Achse in die Nuten eingebracht werden, dass
- die ersten Greifelemente früher und/oder schneller radial bewegt werden als die zweiten Greifelemente, oder
- die zweiten Greifelemente früher und/oder schneller radial bewegt werden als die ersten Greifelemente.

Gemäß einer Ausführung ist vorgesehen, dass die Greifelemente zum Drücken der Drähte in die Nuten radial einwärts bewegt werden.

Gemäß einer Ausführung ist vorgesehen, dass die Greifelemente zum Drücken der Drähte in die Nuten radial auswärts bewegt werden.

Gemäß einer Ausführung ist vorgesehen, dass die Vorrichtung Mittel zum abschließenden Verschließen der Nuten mit jeweils zumindest einem Deckschieber aufweist.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1 bis 8:: Zustände in einem Verfahren gemäß einem ersten Ausführungsbeispiel,
- Fig. 9 bis 17:: Zustände in einem Verfahren gemäß einem zweiten Ausführungsbeispiel.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

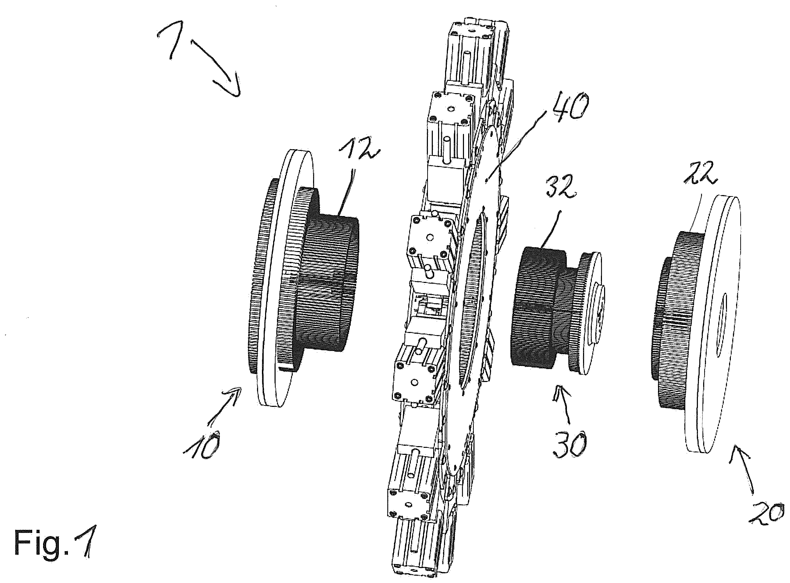

Figur 1 zeigt eine Vorrichtung 1 gemäß einem ersten Ausführungsbeispiel der Erfindung zum Durchführen eines Verfahrens gemäß einem ersten Ausführungsbeispiel der Erfindung.

Die Vorrichtung 1 weist eine erste Greifeinheit 10 mit einer Anzahl von ersten Greifelementen 12 sowie eine zweite Greifeinheit 20 mit einer Anzahl von zweiten Greifelementen 22 auf. Die Greifelemente 12, 22 sind dabei jeweils wie gezeigt nach innen gerichtet.

Zwischen den Greifeinheiten 10, 20 ist ein Fügewerkzeug 30 angeordnet. Auf diesem sind eine Anzahl von Leitblechen 32 angebracht.

Außerdem weist die Vorrichtung 1 einen Sternmotor 40 auf. Auch dieser ist zwischen den Greifeinheiten 10, 20 angeordnet.

Die Greifeinheiten 10, 20, das Fügewerkzeug 30 und der Sternmotor 40 sind alle im Wesentlichen radialsymmetrisch ausgebildet. Sie sind entlang einer nicht eingezeichneten Längsachse angeordnet, wobei wie erwähnt die Greifeinheiten 10, 20 außen angeordnet sind.

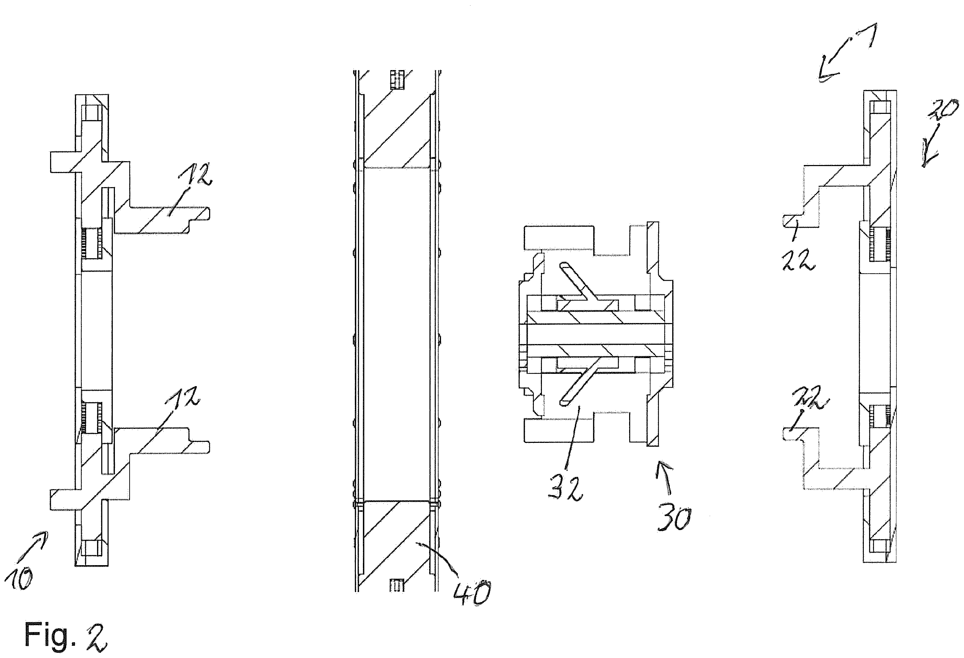

Figur 2 zeigt die Vorrichtung 1 in einer seitlichen Schnittansicht. Dabei ist insbesondere zu erkennen, dass ein jeweiliges Greifelement 12, 22 in Form eines nach innen gerichteten Vorsprungs ausgeführt ist. Die Greifelemente 12, 22 sind dabei radial beweglich ausgeführt. Hierauf wird weiter unten noch näher eingegangen werden.

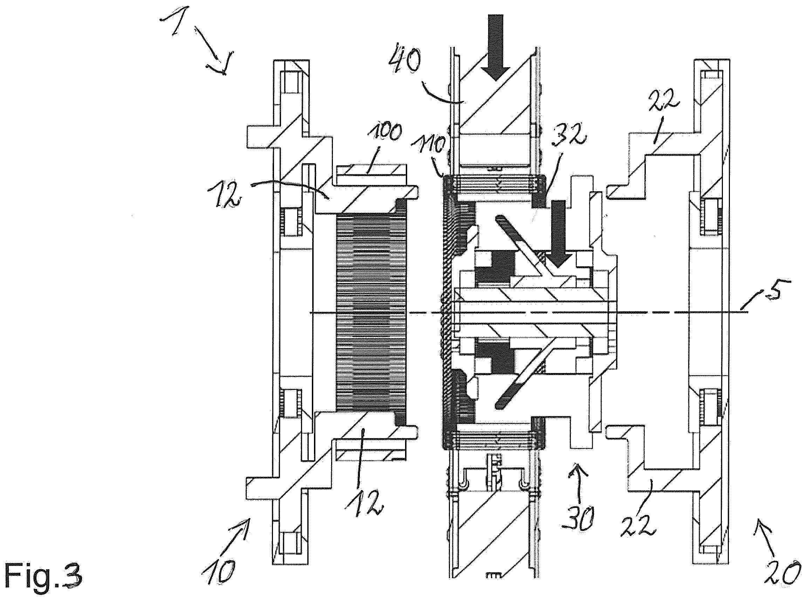

Figur 3 zeigt die Vorrichtung 1 in einem Zustand, in welchem die bereits erwähnten Bestandteile näher beieinander sind als dies in den Figuren 1 und 2 der Fall ist. In Figur 3 ist die bereits erwähnte Längsachse 5 eingezeichnet. Es sei verstanden, dass sich Angaben wie "radial" oder "axial" typsicherweise auf diese Längsachse 5 beziehen.

Des Weiteren sind in Figur 3 ein Bauteil 100 in Form eines Stators für einen Elektromotor sowie Drähte 110 eingezeichnet. Die Drähte 110 sind dabei in Form eines Drahtpakets ausgebildet.

Das Bauteil 100 wird wie gezeigt durch die ersten Greifelemente 12 gehalten.

Die Drähte 110 werden mittels eines ersten Ausführungsbeispiels des erfindungsgemäßen Verfahrens in Nuten des Bauteils 100 eingebracht werden. Es wird nachfolgend näher beschrieben werden, wie dies vor sich geht.

In dem in Figur 3 gezeigten Zustand sind das Bauteil 100 und die Drähte 110 noch axial versetzt zueinander ausgerichtet. Die Drähte 110 werden dabei zunächst komprimiert. Dies erfolgt mittels des Sternmotors 40, welcher eine Anzahl nicht näher dargestellter radial beweglicher Elemente aufweist. Der Komprimiervorgang ist mittels des in Figur 3 radial außen eingezeichneten Pfeils dargestellt.

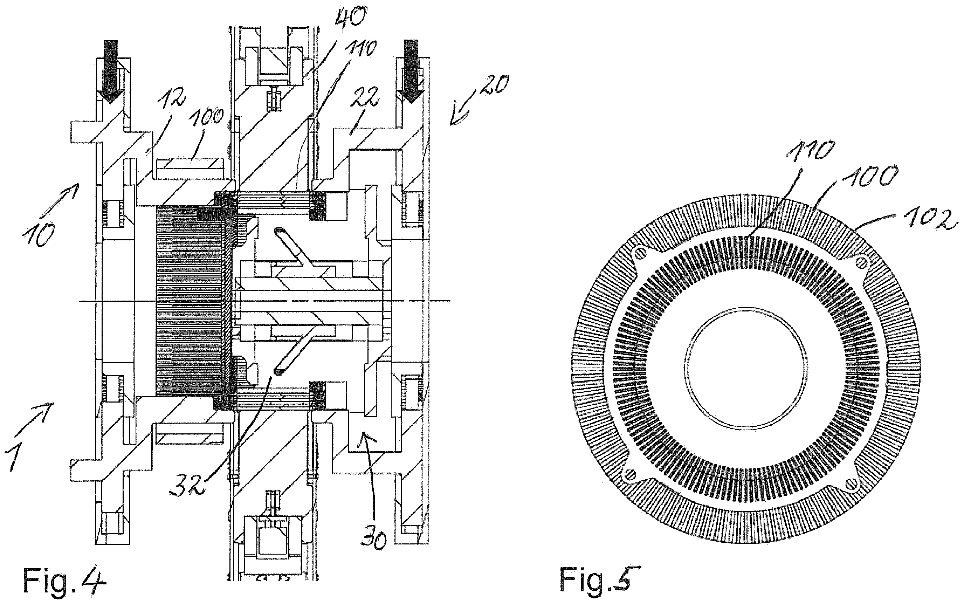

Figur 4 zeigt einen späteren Zustand im Verfahren. Dabei werden die ersten Greifelemente 12 und die zweiten Greifelemente 22 radial nach innen bewegt, wie dies durch die beiden Pfeile in Figur 4 dargestellt ist. Dies dient dazu, die Drähte 110 radial außenseitig zu halten und nach innen zu drücken. Dies erlaubt ein Zurückziehen des Sternmotors, da letztlich die Greifelemente 12, 22 eine Haltefunktion übernehmen. Das Greifen erfolgt dabei an zwei axialen Enden der Drähte 110.

Es sei darauf hingewiesen, dass es insbesondere auch möglich ist, zum Komprimieren der Drähte sowohl den Sternmotor 40 wie auch die Greifelemente 12, 22 zu verwenden. Dies entspricht einer hybriden Ausführung.

In dem Zustand, welchen die Drähte 110 in den Figuren 3 und 4 einnehmen, befinden sich die Drähte zwischen den Leitblechen 32. Die Leitbleche 32 sind auch radial beweglich, was weiter unten näher beschrieben werden wird.

Figur 5 zeigt das Bauteil 100 und die Drähte 110 separat in einer Seitenansicht. Dabei ist zu erkennen, dass das Bauteil 100 eine Vielzahl von bereits erwähnten Nuten 102 aufweist. In diese sollen die Drähte 110 eingebracht werden.

Es sei erwähnt, dass vorliegend jeder Nut 102 jeweils genau ein erstes Greifelement 12 und ein zweites Greifelement 22 zugeordnet ist.

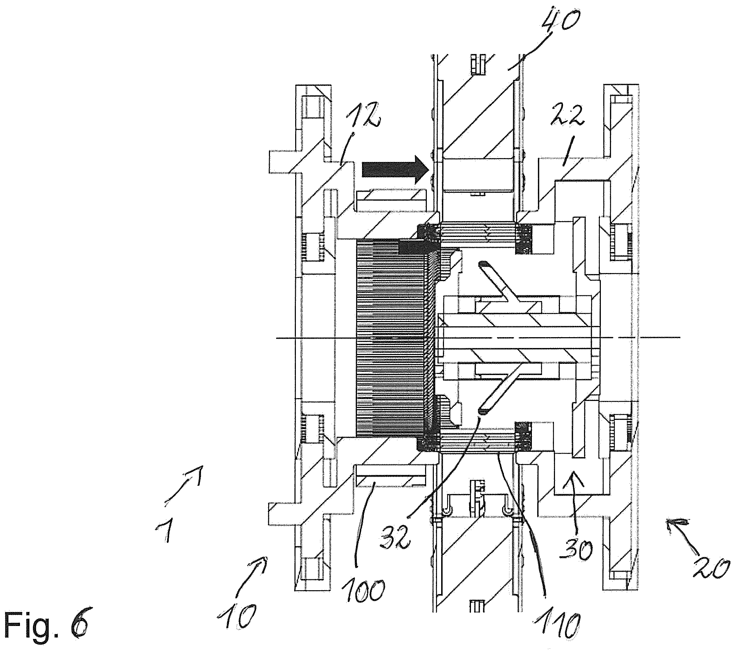

Figur 6 zeigt den gleichen Zustand wie Figur 4, jedoch ist in Figur 6 mittels eines Pfeils angedeutet, dass nunmehr das Bauteil 100 axial nach rechts verschoben wird.

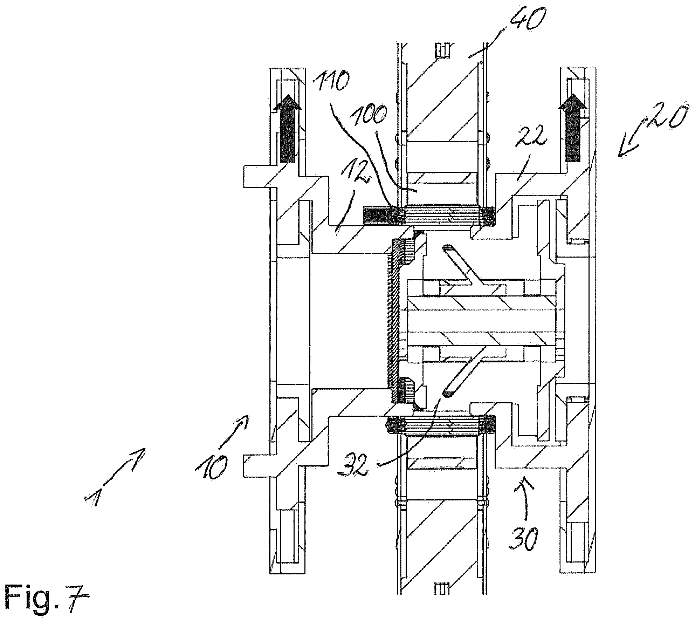

Der daraus resultierende Zustand ist in Figur 7 gezeigt. In diesem Zustand sind nun die Drähte 110 zum Einbringen in die Nuten 102 des Bauteils 100 bereitgestellt. Die Drähte 110 sind dabei axial versetzt, vorliegend axial innenliegend zu dem Bauteil 100.

Im Unterschied zum Zustand von Figur 6 greifen bei dem Zustand von Figur 7 die Greifelemente 12, 22 nicht radial außen, sondern radial innen an den Drähten 110 an. Hierzu wurden sie zwischen den beiden in den Figuren 6 und 7 dargestellten Zuständen zunächst axial nach außen weg gezogen, dann radial nach innen versetzt und dann wieder axial aufeinander zu geschoben.

Ausgehend von dem in Figur 7 dargestellten Zustand werden nun die Drähte 110 in die Nuten 102 des Bauteils 100 eingebracht. Hierzu werden die Greifelemente 12, 22 radial nach außen bewegt, wie dies durch die beiden Pfeile in Figur 7 dargestellt ist. Die Drähte 110 werden dabei radial nach außen bewegt und somit in die Nuten 102 eingebracht. Die Leitbleche 32 werden bei diesem Vorgang radial nach innen bewegt.

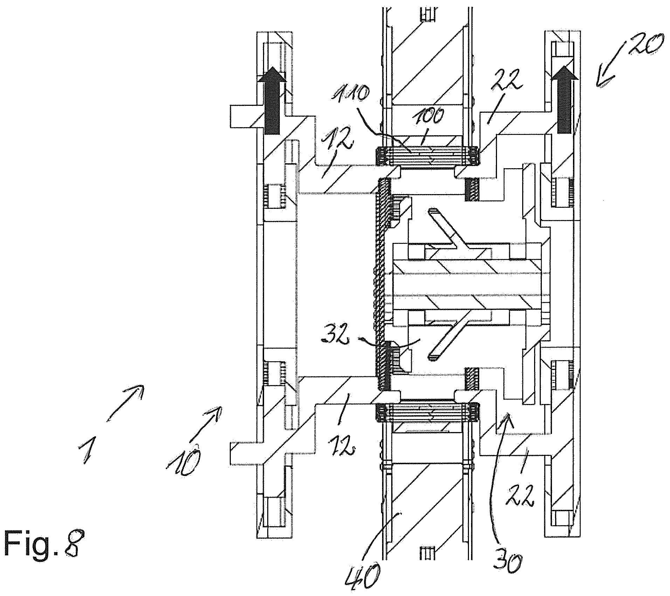

Figur 8 zeigt einen Zustand, in welchem die Drähte 110 vollständig in den Stator 100 eingebracht wurden. Dabei ist zu erkennen, dass die Greifelemente 12, 22 radial weiter auswärts sind als in dem Zustand von Figur 7.

Es sei erwähnt, dass die Drähte auch schief eingebracht werden können, indem die ersten Greifelemente 12 vor und/oder schneller als die zweiten Greifelemente 22 radial auswärts bewegt werden, oder umgekehrt. Dadurch kann ein Verkanten der Drähte 110 beim Einbringen vermieden werden.

Es sei des Weiteren verstanden, dass es grundsätzlich möglich ist, das Verfahren derart durchzuführen, dass die Drähte 110 von radial auswärts in radial nach außen geöffnete Nuten eingebracht werden. Im Wesentlichen sind hierzu die radialen Bewegungsrichtungen der Greifelemente 12, 22 umzukehren.

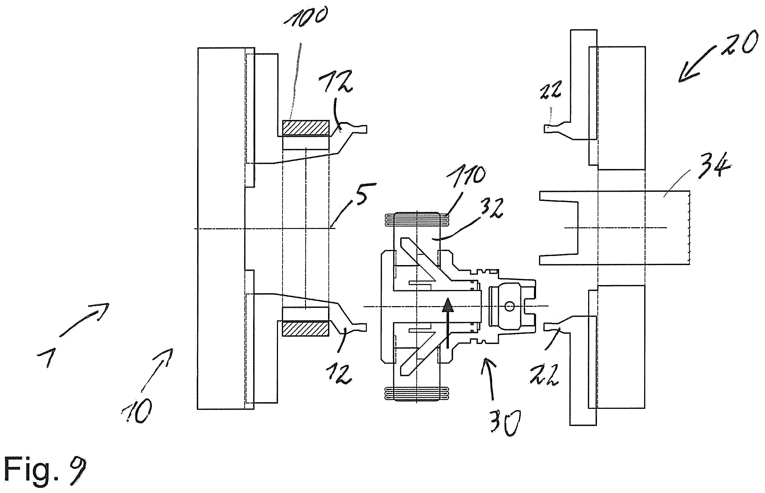

Die Figuren 9 bis 17 zeigen eine Verfahrensführung gemäß einem zweiten Ausführungsbeispiel der Erfindung.

Die Vorrichtung 1 ist dabei etwas anders ausgeführt, nämlich gemäß einem zweiten Ausführungsbeispiel der Erfindung. Dies betrifft zum einen das genaue Aussehen der Komponenten der Vorrichtung 1, zum anderen die Tatsache, dass bei der Verfahrensführung gemäß dem zweiten Ausführungsbeispiel kein Sternmotor 40 verwendet wird.

Die Figuren 9 bis 17 werden nachfolgend nur noch in verkürzter Form beschrieben. Soweit auf Elemente oder Verfahrensschritte nicht explizit eingegangen wird, sei auf die korrespondierende Beschreibung der Figuren 1 bis 8 verwiesen. Es werden die gleichen Bezugszeichen verwendet.

In Figur 9 ist ein Zustand gezeigt, in welchem das Bauteil 100 von den ersten Greifelementen 12 gehalten wird. Außerdem werden die Drähte 110 von den Leitblechen 32 des Fügewerkzeugs 30 gehalten.

Das Fügewerkzeug 30 ist in dem Zustand von Figur 9 noch nicht mir der Längsachse 5 ausgerichtet, sondern dazu versetzt.

Dem Fügewerkzeug 30 ist in dem zweiten Ausführungsbeispiel ein Zentrierelement 34 zugeordnet. Sofern das Fügewerkzeug mit der Längsachse 5 ausgerichtet ist, wird es von dem mit der Längsachse 5 ausgerichteten Zentrierelement 34 zentriert.

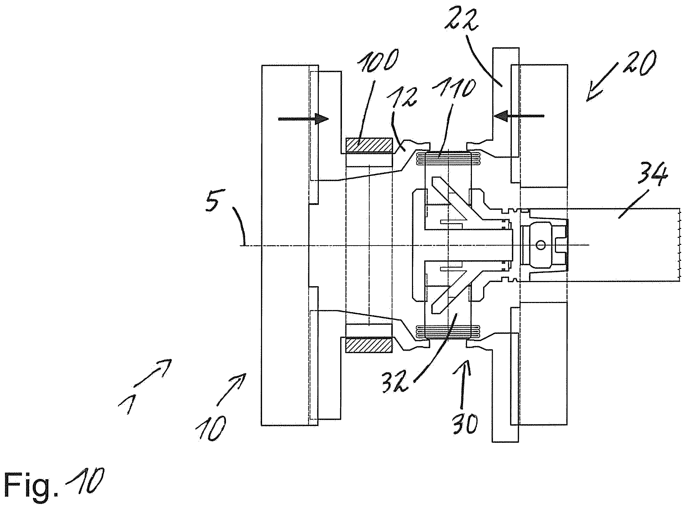

In Figur 10 ist ein Zustand gezeigt, in welchem das Fügewerkzeug 30 mit seinen aufgebrachten Drähten 110 mit der Längsachse 5 ausgerichtet ist und von dem Zentrierelement 34 zentriert wird.

Die Greifeinheiten 10, 20 wurden dabei axial aufeinander zu bewegt, wie dies durch die Pfeile in Figur 10 dargestellt ist.

Die Greifelemente 12, 22 wurden dabei soweit radial auswärts gefahren, dass sie nunmehr auf die Drähte 110 von radial außen drücken.

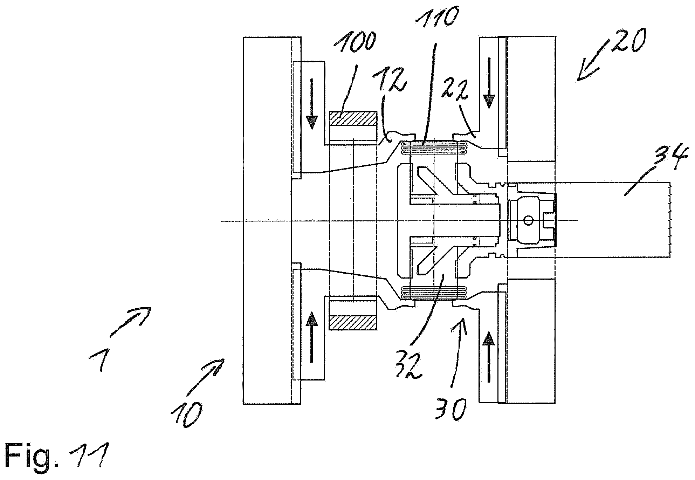

Nun kann mittels der Greifelemente 12, 22 eine Komprimierung der Drähte 110 vorgenommen werden. Dies ist durch die Pfeile in Figur 11 dargestellt. Damit werden die als Drahtpaket ausgeführten Drähte 110 verdichtet.

Es sei erwähnt, dass bei dem zweiten Ausführungsbeispiel kein Sternmotor zum Komprimieren der Drähte 110 verwendet wird, sondern das Komprimieren ausschließlich mittels der Greifelemente 12, 22 erfolgt.

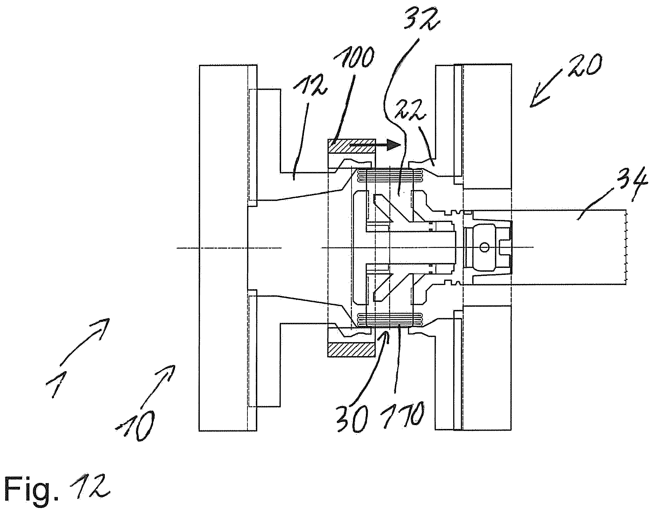

Nach dem Komprimieren wird das Bauteil 100 axial verschoben, so dass sich das Bauteil 100 radial außerhalb, also radial versetzt zu den Drähten befindet. Diese Bewegung ist mittels des Pfeils in Figur 12 dargestellt.

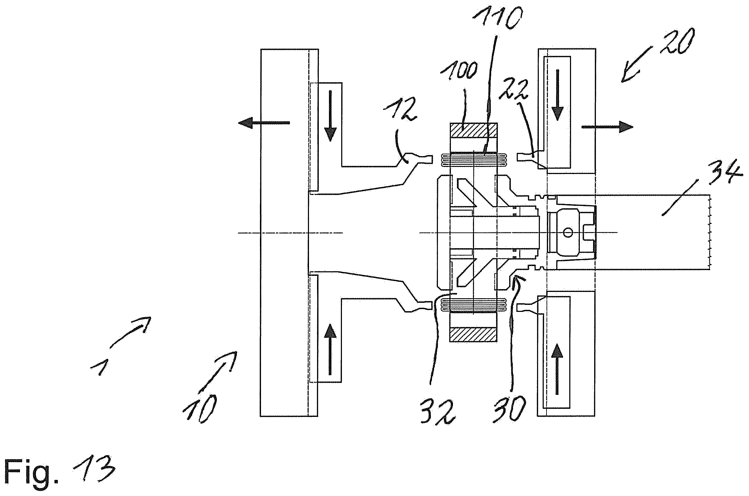

Ein daraus resultierender Zustand ist in Figur 13 dargestellt. Dabei sind nun die Drähte 110 zum Einbringen in die Nuten des Bauteils 100 bereitgestellt.

Nunmehr werden die Greifelemente 12, 22 axial nach außen weggezogen und dann radial nach innen bewegt. Dies ist durch die Pfeile in Figur 13 dargestellt. Damit können die Greifelemente 12, 22 radial nach innen verbracht werden, ohne dass eine Beschädigung der Drähte 110 droht.

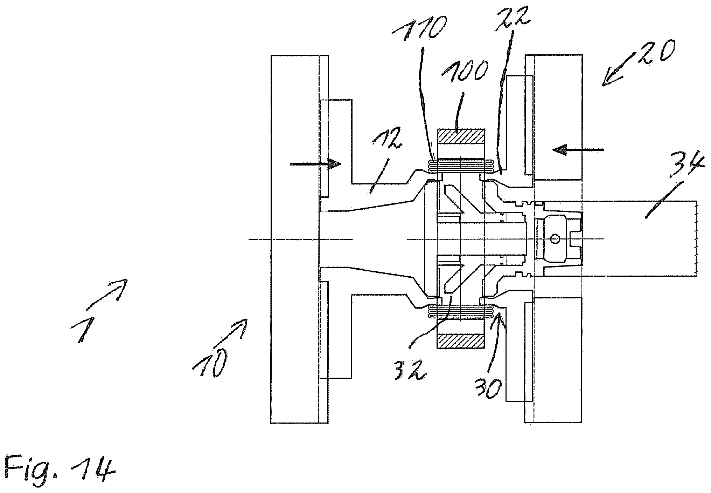

Der nach der beschriebenen Bewegung der Greifelemente 12, 22 eingenommene Zustand ist Figur 14 dargestellt. Dabei greifen nunmehr die Greifelemente 12, 22 die Drähte 110 von radial innen her an.

Die axiale Bewegung, mittels welcher die Greifelemente 12, 22 wieder zu den Drähten 110 hin bewegt wurden, ist in Figur 14 durch die Pfeile dargestellt.

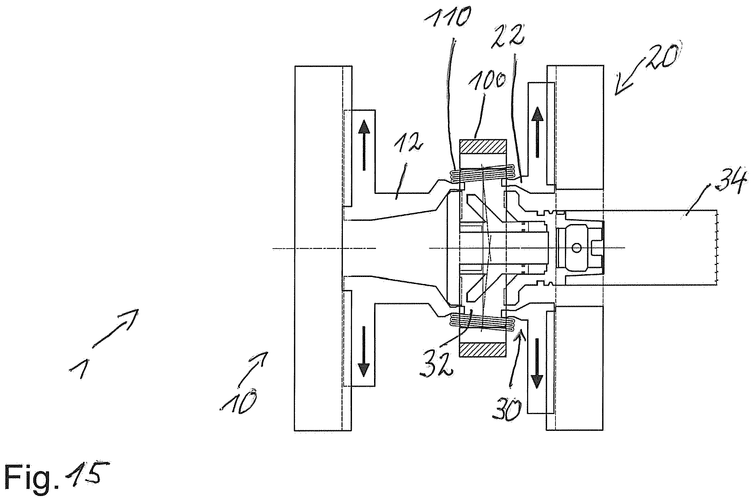

In Figur 15 ist das Einbringen der Drähte 110 in die Nuten 102 des Bauteils 100 dargestellt. Dabei ist zu sehen, dass die zweiten Greifelemente 22 radial weiter auswärts sind als die ersten Greifelemente 12. Dies liegt daran, dass mit der Bewegung der zweiten Greifelemente 22 früher begonnen wurde als mit der Bewegung der ersten Greifelemente 12.

Durch diese Vorgehensweise werden die Drähte 110 schief in die Nuten 102 des Bauteils 100 eingebracht. Damit können Verkantungen verhindert werden.

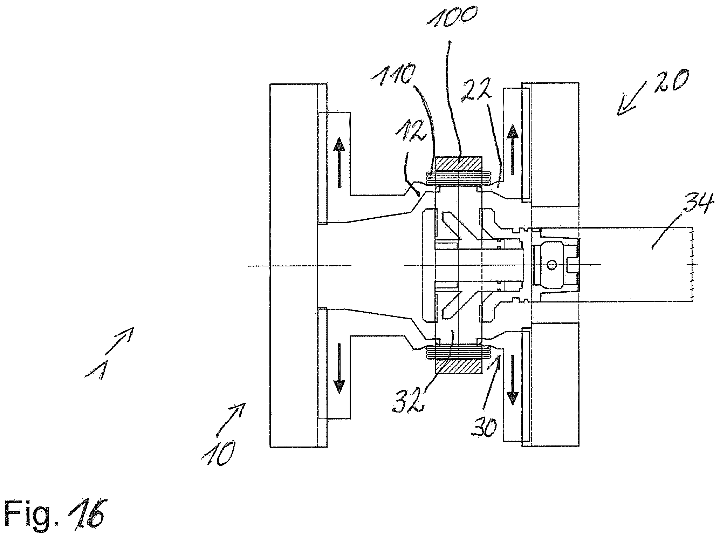

Figur 16 zeigt einen Zustand, in welchem die Drähte 110 fertig in das Bauteil 100 eingebracht wurden.

Die radial auswärts gerichteten Bewegungen der Greifelemente 12, 22 zum Einbringen der Drähte 110 sind in den Figuren 15 und 16 durch Pfeile angezeigt.

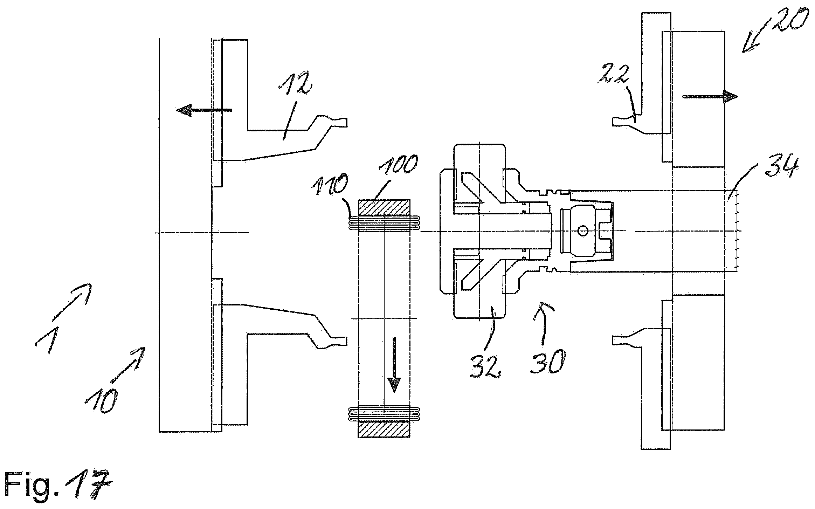

In Figur 17 ist gezeigt, wie die Komponenten der Vorrichtung 1 von dem Bauteil 100 mit eingebrachten Drähten 110 weg bewegt werden. Dadurch wird das Bauteil 100 freigelegt, so dass es anderweitig verwendet werden kann. Beispielsweise kann es in einen Elektromotor eingebaut werden.

## Patentansprüche

1. Verfahren zum Einbringen einer Mehrzahl von Drähten (110) in eine Mehrzahl von Nuten (102) eines Bauteils (100) in Form eines Stators oder eines Rotors eines Elektromotors, wobei das Bauteil (100) eine Längsachse (5) aufweist, wobei das Verfahren folgende Schritte aufweist:
- Bereitstellen der Drähte (110) radial versetzt zum Bauteil (100), so dass sich die Drähte (110) zumindest teilweise entlang der Längsachse (5) erstrecken,
- Greifen der Drähte (110) an ihrem jeweiligen ersten axialen Ende mittels einer Anzahl von ersten Greifelementen (12) und an ihrem jeweiligen zweiten, dem ersten gegenüberliegenden axialen Ende mittels einer Anzahl von zweiten Greifelementen (22), und radiales Bewegen der Greifelemente (12, 22), dabei Drücken der Drähte (110) in die Nuten (102),
**dadurch gekennzeichnet, dass** die Drähte (110) vor dem Bereitstellen komprimiert werden und dass die Drähte (110) beim Komprimieren auf oder zwischen eine Anzahl von Leitblechen (32) gedrückt werden, welche radial beweglich sind.

2. Verfahren nach Anspruch 1, **dadurch gekennzeichnet, dass**
- die Drähte (110) vor dem Bereitstellen axial versetzt zum Bauteil (100) angeordnet sind, und
- zum Bereitstellen Bauteil (100) und Drähte (110) relativ zueinander axial verschoben werden, so dass Bauteil (100) und Drähte (110) axial zueinander ausgerichtet sind.

3. Verfahren nach einem der vorhergehenden Ansprüche, **dadurch gekennzeichnet, dass**
- die Drähte (110) vor dem Bereitstellen mittels eines Sternmotors (40) und/oder mittels der ersten Greifelemente (12) und der zweiten Greifelemente (22) komprimiert werden.

4. Verfahren nach einem der vorhergehenden Ansprüche, **dadurch gekennzeichnet, dass**
- die Drähte (110) radial einwärts oder auswärts komprimiert werden.

5. Verfahren nach einem der vorhergehenden Ansprüche, **dadurch gekennzeichnet, dass**
- das Bauteil (100) zumindest anfänglich von den ersten Greifelementen (12) gehalten wird.

6. Verfahren nach einem der vorhergehenden Ansprüche, **dadurch gekennzeichnet, dass**
- die Drähte (110) schief zur Achse (5) in die Nuten (102) eingebracht werden.

7. Verfahren nach einem der vorhergehenden Ansprüche, **dadurch gekennzeichnet, dass**
- die Greifelemente (32) zum Drücken der Drähte (110) in die Nuten (102) radial einwärts oder auswärts bewegt werden.

8. Vorrichtung (1) zum Einbringen einer Mehrzahl von Drähten (110) in eine Mehrzahl von Nuten (102) eines Bauteils (100) in Form eines Stators oder eines Rotors eines Elektromotors, wobei das Bauteil (100) eine Längsachse (5) aufweist, wobei die Vorrichtung (1) folgendes aufweist:
- eine Anzahl von ersten Greifelementen (12) zum Greifen der Drähte (110) an ihrem jeweiligen ersten axialen Ende und eine Anzahl von zweiten Greifelementen (22) zum Greifen der Drähte (110) an ihrem jeweiligen zweiten, dem ersten gegenüberliegenden axialen Ende, wenn die Drähte (110) radial versetzt zum Bauteil (100) bereitgestellt sind, und
- wobei die Greifelemente (12, 22) dazu ausgebildet sind, sich radial zu bewegen und dabei die Drähte (110) in die Nuten (102) zu drücken
**dadurch gekennzeichnet, dass** die Vorrichtung eine Anzahl von radial beweglichen Leitblechen (32) aufweist und dazu ausgebildet ist, die Drähte (110) vor dem Bereitstellen zu komprimieren, wobei die Drähte (110) beim Komprimieren auf oder zwischen die Leitbleche (32) gedrückt werden.

9. Vorrichtung (1) nach Anspruch 8, **dadurch gekennzeichnet, dass**
- die Vorrichtung (1) dazu ausgebildet ist, ein Verfahren einem der Ansprüche 1 bis 7 auszuführen.

## Claims

1. Method for inserting a plurality of wires (110) into a plurality of grooves (102) of a component (100) in the form of a stator or a rotor of an electric motor, the component (100) having a longitudinal axis (5), the method comprising the following steps:
- providing the wires (110) radially offset to the component (100) so that the wires (110) extend at least partially along the longitudinal axis (5),
- gripping the wires (110) at their respective first axial ends by means of a number of first gripping elements (12) and at their respective second axial ends opposite said first axial ends by means of a number of second gripping elements (22), and radially moving the gripping elements (12, 22) and thereby pressing the wires (110) into the grooves (102), **characterized in that** the wires (110) are compressed before provision and that the wires (110) are pressed onto or between a number of guide plates (32), which are preferably radially movable, during compression.

2. Method according to claim 1, **characterized in that**
- the wires (110) are arranged axially offset to the component (100) before providing them, and
- the component (100) and the wires (110) are axially displaced relative to one another so that the component (100) and the wires (110) are aligned with one another in order to provide them.

3. Method according to one of the preceding claims, **characterized in that**
- the wires (110) are compressed before provision by means of a radial engine (40) and/or by means of the first gripping elements (12) and the second gripping elements (22).

4. Method according to one of the preceding claims, **characterized in that**
- the wires (110) are compressed radially inwards or radially outwards.

5. Method according to one of the preceding claims, **characterized in that**
- the component (100) is held by the first gripping elements (12), at least initially.

6. Method according to one of the preceding claims, **characterized in that**
- the wires (110) are inserted obliquely to the axis (5) into the grooves (102).

7. Method according to one of the preceding claims, **characterized in that**
- the gripping elements (32) are moved radially inwards or outwards to press the wires (110) into the grooves (102).

8. Device (1) for inserting a plurality of wires (110) into a plurality of grooves (102) of a component (100) in the form of a stator or a rotor of an electric motor, the component (100) having a longitudinal axis (5), the device (1) comprising the following:
- a number of first gripping elements (12) for gripping the wires (110) at their respective first axial ends, and a number of second gripping elements (22) for gripping the wires (110) at their respective second axial ends opposite said first axial ends when the wires (110) are provided radially offset to the component (100), and
- wherein the gripping elements (12, 22) are designed for moving radially and thereby pressing the wires (110) into the grooves (102),
**characterized in that** the device comprises a number of radially movable guide plates (32) and is designed for compressing the wires (110) before provision, the wires (110) being pressed onto or between the guide plates (32) during compression.

9. Device (1) according to claim 8, **characterized in that**
- the device (1) is designed for carrying out a method according to one of the claims 1 to 7.

## Revendications

1. Procédé d'insertion d'une multitude de fils (110) dans une multitude de rainures (102) d'un composant (100) sous la forme d'un stator ou d'un rotor d'un moteur électrique, le composant (100) ayant un axe longitudinal (5), le procédé comprenant les étapes suivantes consistant à :
- fournir les fils (110) de manière décalée radialement par rapport au composant (100) de sorte que les fils (110) s'étendent au moins partiellement le long de l'axe longitudinal (5),
- saisir les fils (110) à leur première extrémité axiale respective à l'aide d'un certain nombre de premiers éléments de préhension (12) et à leur seconde extrémité axiale respective opposée à la première à l'aide d'un certain nombre de seconds éléments de préhension (22), et déplacer radialement les éléments de préhension (12, 22) en pressant les fils (110) dans les rainures (102),
**caractérisé en ce que**
avant d'être fournis, les fils (110) sont comprimés, et **en ce que** lors de la compression, les fils (110) sont pressés sur ou entre un certain nombre de tôles de guidage (32) qui sont mobiles radialement.

2. Procédé selon la revendication 1,
**caractérisé en ce que**
- avant d'être fournis, les fils (110) sont disposés de manière décalée axialement par rapport au composant (100), et
- pour être fournis, le composant (100) et les fils (110) sont déplacés axialement les uns par rapport aux autres de sorte que le composant (100) et les fils (110) soient orientés axialement les uns par rapport aux autres.

3. Procédé selon l'une des revendications précédentes,
**caractérisée en ce que**
- avant d'être fournis, les fils (110) sont comprimés à l'aide d'un moteur en étoile (40) et/ou à l'aide des premiers éléments de préhension (12) et des seconds éléments de préhension (22).

4. Procédé selon l'une des revendications précédentes,
**caractérisé en ce que**
les fils (110) sont comprimés radialement vers l'intérieur ou vers l'extérieur.

5. Procédé selon l'une des revendications précédentes,
**caractérisé en ce que**
le composant (100) est au moins initialement retenu par les premiers éléments de préhension (12).

6. Procédé selon l'une des revendications précédentes,
**caractérisé en ce que**
les fils (110) sont insérés dans les rainures (102) en oblique par rapport à l'axe (5).

7. Procédé selon l'une des revendications précédentes,
**caractérisé en ce que**
pour presser les fils (110) dans les rainures (102), les éléments de préhension (32) sont déplacés radialement vers l'intérieur ou vers l'extérieur.

8. Dispositif (1) pour insérer une multitude de fils (110) dans une multitude de rainures (102) d'un composant (100) sous la forme d'un stator ou d'un rotor d'un moteur électrique, le composant (100) ayant un axe longitudinal (5), le dispositif (1) comprenant :
- un certain nombre de premiers éléments de préhension (12) pour saisir les fils (110) à leur première extrémité axiale respective, et un certain nombre de seconds éléments de préhension (12) pour saisir les fils (110) à leur seconde extrémité axiale respective opposée à la première, lorsque les fils (110) sont fournis en étant décalés radialement par rapport au composant (100),
- les éléments de préhension (12, 22) étant réalisés pour se déplacer radialement tout en pressant les fils (110) dans les rainures (102), **caractérisé en ce que**
le dispositif comprend un certain nombre de tôles de guidage (32) mobiles radialement et est réalisé pour comprimer les fils (110) avant de les fournir, les fils (110) étant pressés sur ou entre les tôles de guidage (32) lors de la compression.

9. Dispositif (1) selon la revendication 8,
**caractérisé en ce que**
le dispositif (1) est réalisé pour mettre en oeuvre un procédé selon l'une des revendications 1 à 7.
